# EUROPÄISCHE PATENTSCHRIFT

(11) **EP 3 589 522 B1**
(45) Veröffentlichungstag und Bekanntmachung des Hinweises auf die Patenterteilung: **24.03.2021**
(21) Anmeldenummer: 17829675.2
(22) Anmeldetag: 29.12.2017
(51) Int. Cl.: B61C 15/10

(54) **DOSIEREINRICHTUNG FÜR EINE SANDSTREUANLAGE EINES SCHIENENFAHRZEUGS**
METERING DEVICE FOR A SAND-SPREADING SYSTEM OF A RAIL VEHICLE
DISPOSITIF DE DOSAGE POUR UNE INSTALLATION DE SABLAGE D'UN VÉHICULE SUR RAILS

(30) Priorität: 03.04.2017 DE 102017205622
(43) Veröffentlichungstag der Anmeldung: 08.01.2020
(73) Patentinhaber: Siemens Mobility GmbH, 81739 München (DE)
(72) Erfinder: GRONAU, Hans-Joachim, 85256 Vierkirchen (DE)
(86) Internationale Anmeldenummer: PCT/EP2017/084796
(87) Internationale Veröffentlichungsnummer: WO 2018/184711

(56) Entgegenhaltungen:
- EP-A1- 1 612 117
- DE-A1- 2 146 540
- DE-A1- 10 044 608
- US-A- 1 776 688
- US-A- 3 677 590

## Beschreibung

Die Erfindung bezieht sich auf eine Dosiereinrichtung nach dem Oberbegriff des Patentanspruches 1.

Ein Schienenfahrzeug, insbesondere eine Lokomotive oder ein Triebzug, weist antreib- und/oder abbremsbare Fahrzeugräder auf. Um einen optimalen Reibwert zwischen Fahrzeugrad und Fahrschiene beim Anfahren, Bremsen und während der Fahrt des Schienenfahrzeugs zu erhalten, wird bedarfsweise Streusand mittels einer Sandtreuanlage in den Spalt zwischen Fahrzeugrad und Fahrschiene eingebracht. Eine solche Sandstreuanlage umfasst einen Sandkasten zur Bevorratung von Streusand, eine am Sandkasten befestigte Dosiereinrichtung zur druckluftgesteuerten Dosierung des Streusandaustritts, und ein über eine Sandleitung mit der Dosiereinrichtung verbundenes und vor einem Fahrzeugrad mündendes Sandauslaufrohr.

Aus der Offenlegungsschrift DE 21 46 540 A1 ist eine Dosiereinrichtung für eine Sandstreuanlage eines Schienenfahrzeugs bekannt, bei der der Sandweg ausschließlich durch Bohrungen in einem Gehäuseblock herausgearbeitet ist. Dem Sandzulauf aus einem über dem Gehäuseblock angeordneten Sandbehälter dienen Bohrungen, die in ein Fallrohr übergehen. Das Fallrohr mündet in den zylindrischen Sandraum, der durch eine leicht geneigte Bohrung gebildet wird. In deren unteres Ende ist von außen ein koaxial in den Sandraum ragendes Strahlrohr eingeschraubt. Das Fallrohr mündet ein kurzes Stück hinter dem Ende des Strahlrohres in den darunter liegenden Sandraum. Eine senkrechte Bohrung bildet den Eingangsteil eines Sandausstoßrohrs. An den Gehäuseblock ist ein den Endteil des Sandausstoßrohrs bildendes Rohrstück angeschlossen, welches in einen geneigten, auf das Fahrzeugrad gerichteten Rohrteil übergeht. Den Übergang vom Sandraum in den senkrechten Teil des Sandausstoßrohres, das den gleichen Querschnitt wie der Sandraum hat, bildet eine Querbohrung mit einem größeren Querschnitt als der Sandraum. Ein weiteres Strahlrohr ist koaxial von oben in das Sandausstoßrohr eingeführt und ragt bis in den geneigten Rohrteil des Sandausstoßrohres. Im oberen, senkrechten Teil des Sandausstoßrohres ist eine Entlüftungsbohrung vorgesehen.

Die bekannte Dosiereinrichtung weist hohe Dosierungstoleranzen der ausgetragenen Streusandmenge auf und ist insbesondere hinsichtlich des weiteren Strahlrohrs verschleißanfällig.

Aus der US 3, 677, 590 A ist eine weitere Sandstreueinrichtung bekannt, bei der Sand durch sein Eigengewicht über einen Eingang in eine Sandkammer gelangt. Durch einen Ausgang und durch ein nachfolgendes Sandrohr gelangt der Sand kontrolliert auf die Schiene.

Der Erfindung liegt daher die Aufgabe zugrunde, eine Dosiereinrichtung der eingangs genannten Art bereitzustellen, die eine präzisere Dosierung der ausgetragenen Streusandmenge erlaubt und dabei weniger verschleißanfällig ist.

Die Aufgabe wird erfindungsgemäß gelöst durch eine gattungsgemäße Sandtreppe, mit den im kennzeichnenden Teil des Patentanspruches 1 angegebenen Merkmalen. Demnach umfasst eine Dosiereinrichtung für eine Sandstreuanlage eines Schienenfahrzeugs einen Gehäuseblock, in dem sich ein Sandweg erstreckt. Der Sandweg führt von einem Sandzuführtrichter über einen Sandmischkanal in einen senkrechten Sandausblaskanal. Der Sandmischkanal steigt von einem Sandaufnahmeraum geneigt an zu einem Sandumlenkraum. Die Dosiereinrichtung umfasst ferner ein von unten koaxial in den Sandmischkanal ragendes Schubluftrohr zur Erzeugung eines Streusand fördernden Luftstromes. Erfindungsgemäß erstreckt sich im Gehäuseblock ein von oben in den Sandumlenkraum mündender Einströmkanal, in den ein Düseneinsatz zur Erzeugung eines nach unten in den Sandausblaskanal gerichteten Luftstrahls lösbar eingesetzt ist. Der Luftstrahl ist nach unten koaxial in den Sandausblaskanal gerichtet und erzeugt hierdurch einerseits eine Saugwirkung durch Unterdruck im Sandmischkanal und andererseits eine Erhöhung des Volumenstroms der Förderluft im Sandausblaskanal. Durch Verwendung des Düseneinsatzes wird nicht nur das verschleißanfällige, in die Sandleitung ragende und gebogene Strahlrohr vermieden, sondern auch die Möglichkeit geschaffen, die ausgetragene Streusandmenge durch den Düseneinsatz präziser mittels Druckluft steuern zu können.

In einer vorteilhaften Ausführungsform der erfindungsgemäßen Dosiereinrichtung ist der Düseneinsatz als Messingdrehteil ausgebildet. Hierdurch ist eine präzise Herstellung des Düseneinsatzes mit hoher Maßhaltigkeit hinsichtlich seines Düsendurchmessers möglich. Der Düseneinsatz kann beispielsweise als zylindrische Hülse ausgeführt sein und eine axiale Durchgangsbohrung aufweisen, die den präzisen Düsendurchmesser definiert. Hierdurch wird der Luftstrahl hinsichtlich Ausrichtung und Strahlstärke genau definiert, was zur Präzisionserhöhung der Sandaustragdosierung beiträgt. Am stromaufwärtigen Ende kann die Hülse einen flachen, zylindrischen Ansatz aufweisen, der in eine entsprechende Senkung des Einströmkanals passt. Deren Form erlaubt ein einfaches Einstecken des Düseneinsatzes in den Einströmkanal sowie ein ebenso einfaches Entfernen, so dass bei der erfindungsgemäßen Dosiereinrichtung ohne großen Aufwand ein Wechsel des Düseneinsatzes vorgenommen werden kann. Hierdurch kann ein verstopfter Düseneinsatz schnell durch einen sauberen ersetzt werden oder aber durch einen anderen Düseneinsatz mit kleinerem oder größerem Düsendurchmesser ausgetauscht werden.

In einer bevorzugten Ausgestaltung der erfindungsgemäßen Dosiereinrichtung ist der Düseneinsatz aus einem Wechselsatz von Düseneinsätzen mit unterschiedlich bemessenen Düsendurchmessern entsprechend einer Korngröße des benutzten Streusandes auswählbar. Durch Bereitstellung eines Wechselsatzes von Düseneinsätzen mit unterschiedlichen Düsendurchmessern kann der Schienenfahrzeugbetreiber einen Düseneinsatz auswählen, der am besten auf den von ihm verwendeten Streusand - beispielsweise hinsichtlich dessen mittlerer Korngröße - abgestimmt ist. Durch die einfache Auswechselbarkeit des Düseneinsatzes ist dies auch ohne großen Arbeitssaufwand möglich.

In einer vorteilhaften Ausgestaltung der erfindungsgemäßen Dosiereinrichtung steigt der Sandmischkanal unter einem Neigungswinkel im Bereich von 10° bis 40°, vorzugsweise von 20° bis 30°, gegen die Horizontale an. Durch die in Richtung Sandumlenkraum schräg ansteigende Lage des Sandmischkanals wird vermieden, dass durch Erschütterungen und ruckartigen Anfahr- oder Abbremsbewegungen des Schienenfahrzeugs unkontrolliert große Streusandmengen aus dem Sandaufnahmeraum in den Sandausblaskanal gelangen. Dies trägt zu einer präzisen Dosierung der ausgetragenen Streusandmenge bei.

In einer bevorzugten Ausführungsform der erfindungsgemäßen Dosiereinrichtung mündet ein Auslaufabschnitt des Sandzuführtrichters im Bereich einer Mündung des Schubluftrohrs von oben in den Sandmischkanal. Die Querschnittsbemessung des Auslaufabschnitts bestimmt bei gegebener Streusandkörnung die Streusandzufuhr nach dem Sanduhrprinzip, also die pro Zeiteinheit aus dem Auslaufabschnitt austretende Streusandmenge. Je nach Position der Mündung des Schubluftrohrs unter dem Auslaufabschnitt wird ein mehr oder weniger großer Teil des Streusandes direkt vom Luftstrom des Schubluftrohrs mitgenommen. Ein weiterer Teil des durch den Luftstrom geförderten Streusandes rührt von aufgewirbeltem Streusand aus dem Sandaufnahmeraum des Sandmischkanals her.

In einer weiteren vorteilhaften Ausführungsform der erfindungsgemäßen Dosiereinrichtung sind der Sandmischkanal durch eine erste zylindrische Bohrungen und der Sandausblaskanal durch eine zweite zylindrische Bohrung im Gehäuseblock mit gleichen Durchmessern gebildet. Durch zylindrische Bohrungen mit gleichen Durchmessern können der Sandmischkanal und der Sandausblaskanal auf einfache Weise hergestellt werden.

Vorzugsweise ist der Sandumlenkraum der erfindungsgemäßen Dosiereinrichtung durch eine senkrecht zum Sandmischkanal und zum Sandausblaskanal verlaufende zylindrische Querbohrung gebildet, deren Durchmesser größer als die Durchmesser von Sandmischkanal und Sandausblaskanal ist. Durch eine Querbohrung kann der Sandumlenkraum auf einfache Weise hergestellt und durch ein geeignetes Abschlussstück verschossen werden. Die Querbohrung kann so gesetzt werden, dass die äußeren Mantellinien von Sandmischkanal und Sandausblaskanal glatt in die Mantelfläche der Querbohrung übergehen. Hierdurch wird der mit Streusand beladene Luftstrom strömungsgünstig vom Sandmischkanal in den Sandausblaskanal umgelenkt.

In einer weiteren bevorzugten Ausgestaltung der erfindungsgemäßen Dosiereinrichtung ist das Schubluftrohr als Einschraubteil ausgebildet, welches bis zu einer vorgegebenen Einstelltiefe von außen in die erste zylindrische Bohrung eingeschraubt ist. Hierdurch kann auf die Bereitstellung eines Wechselsatzes von Schubluftrohren mit unterschiedlichen Längen verzichtet werden, da die Einstelltiefe des Einschraubteils einfach durch Ein- oder Ausschrauben des Einschraubteils verändert werden kann. In Abhängigkeit der verwendeten Art des Streusandes kann hierdurch die optimale Position der Mündung des Schubluftrohrs relativ zum Auslaufabschnitt des Sandzulauftrichters eingestellt werden. Auch diese Einstellmöglichkeit erhöht die Dosierungspräzision der ausgetragenen Streusandmenge.

In einer weiteren vorteilhaften Ausgestaltung der erfindungsgemäßen Dosiereinrichtung ist der Gehäuseblock als einstückiges Feingussteil oder 3-D-Druckteil gefertigt. Hierdurch kann der Gehäuseblock 2 mit Sandweg - insbesondere im Vergleich zu bislang verwendeten Graugussteilen - mit hoher Maßgenauigkeit ohne großen Nachbearbeitungsaufwand hergestellt werden. Dies wiederum verbessert die Dosierungstoleranzen der ausgetragenen Streusandmengen. Wird der Gehäuseblock 2 aus Edelstahl hergestellt, so können sogar separate Maßnahmen zum Korrosionsschutz entfallen.

In einer weiteren bevorzugten Ausführungsform der erfindungsgemäßen Dosiereinrichtung ist in den Gehäuseblock ein Wärmeelement zur Erwärmung von Streusand integriert. Das Wärmeelement kann stabförmig aufgeführt und in einer Aufnahmebohrung im Gehäuseblock angeordnet sein, welche im Bereich des konischen Abschnitts des Sandzuführtrichters münden. Das Wärmeelement kann einen Heizstab aufweisen, der elektrische Energie in Wärmeenergie umwandelt. Hierdurch erwärmte Luft strömt - gegebenenfalls unterstützt durch einen eingespeisten Versorgungsluftstrom - durch einen Sinterfilter, der ein Vordringen von Streusand aus dem umgebenden Sandweg zum Heizstab verhindert, in den Streusand. Durch die Warmluft wird der Streusand getrocknet und damit rutsch- und rieselfähig gehalten. Dies verbessert die Dosierbarkeit der Streusandmenge insbesondere auch bei feuchtem Wetter und bei niedrigen Temperaturen.

Weitere Eigenschaften und Vorteile der Erfindung ergeben sich aus nachfolgender Beschreibung eines konkreten Ausführungsbeispiels anhand der Zeichnungen, in deren
FIG 1 eine erfindungsgemäße Dosiereinrichtung in Draufsicht und
FIG 2 ein Längsschnitt durch die Dosiereinrichtung entlang der in FIG 1 angedeuteten Schnittlinie II-II
schematisch veranschaulicht sind.

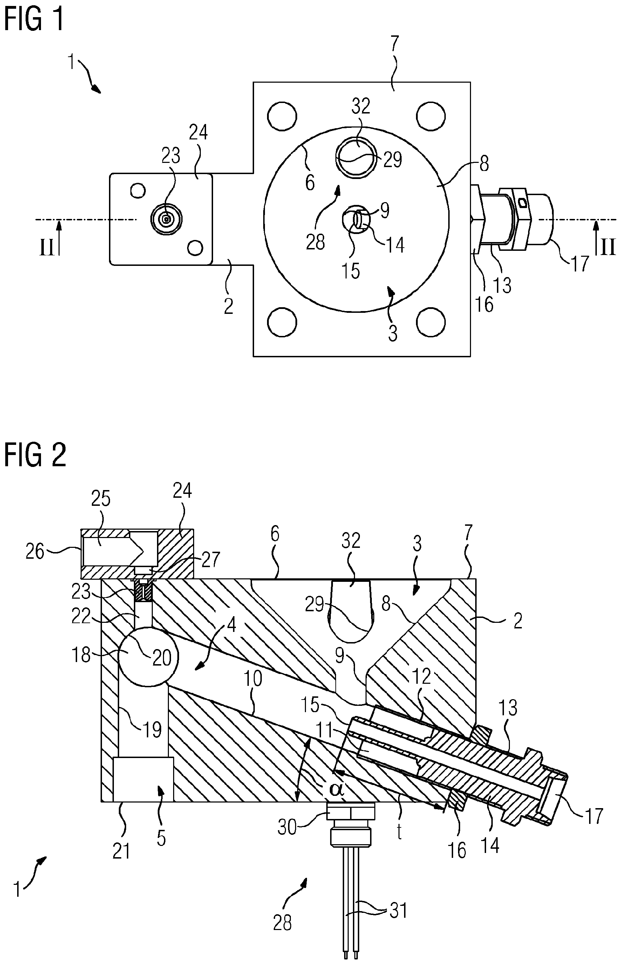

Eine in FIG 1 und FIG 2 gezeigte Dosiereinrichtung 1 dient der druckluftgesteuerten Dosierung des Streusandaustritts einer an sich bekannten und daher in ihrer Gesamtheit nicht dargestellten Sandstreuanlage für ein ebenfalls nicht dargestelltes Schienenfahrzeug. Das Schienenfahrzeug umfasst antreib- und/oder abbremsbare Fahrzeugräder und kann beispielsweise eine Lokomotive oder ein Triebzug sein. Zur Sandstreuanlage gehört ferner ein Sandkasten zur Bevorratung von in die Dosiereinrichtung 1 nachrutschendem Streusand. Streusand verlässt die Dosiereinrichtung 1 durch eine nicht dargestellte Sandleitung, die wiederum mit einem in Fahrtrichtung vor dem Fahrzeugrad mündenden Sandauslaufrohr verbunden ist. Die Dosiereinrichtung 1 umfasst einen Gehäuseblock 2, der als einstückiges Bauteil, insbesondere als Feingussteil oder 3-D-Druckteil, ausgebildet ist, durch dessen hohe Maßgenauigkeit diesbezügliche Nachbearbeitungen vermieden werden. Der Gehäuseblock 2 kann dabei insbesondere aus Edelstahl hergestellt sein, wodurch separate Maßnahmen zum Korrosionsschutz entfallen. Durch den Gehäuseblock 2 erstreckt sich ein Sandweg, der von einem Sandzuführtrichter 3 über einen geneigt ansteigenden Sandmischkanal 4 in einen senkrechten Sandausblaskanal 5 verläuft. Der Sandzuführtrichter 3 weist eine Eintrittsöffnung 6 in einem Befestigungsflansch 7 des Gehäuseblocks 2 auf, über den der Gehäuseblock 2 mittels Schraubverbindungen am Sandkasten anschließbar ist. Durch die Eintrittsöffnung 6 gelangt nachrutschender Streusand in einen konischer Abschnitt 8 des Sandzuführtrichters 3, der in einen Auslaufabschnitt 9 des Sandzuführtrichters 3 mit verengtem Querschnitt übergeht. Der Auslaufabschnitt 9 mündet in den Sandmischkanal 4, der durch eine erste zylindrische Bohrung 10 gebildet ist, die im Gehäuseblock 2 geneigt angeordnet ist. Über die Querschnittsgröße des Auslaufabschnitts 9 kann die zugeführte Streusandmenge nach dem Sanduhrprinzip beeinflusst werden.

Zugeführter Streusand sammelt sich in einem Sandaufnahmeraum 11, der durch den unteren Endabschnitt des Sandmischkanals 4 gebildet ist. In die erste Bohrung 10 ist ein Innengewinde 12 geschnitten, welches mit einem Außengewinde 13 eines ein Schubluftrohr 14 bildenden Einschraubteils korrespondiert. Die erste Bohrung 10 wird durch das eingeführte Einschraubteil von unten verschlossen, so dass dieses den unteren Abschluss des Sandmischkanals 4 und damit des Sandaufnahmeraums 11 bildet. Über die Schraubverbindung kann eine Einstelltiefe t einer Mündung 15 des Schubluftrohrs 14 verstellt und durch eine am Außengewinde 13 des Einschraubteils verstellbare Kontermutter 16 fixiert werden. An seinem äußeren Ende weist das Einschraubteil einen Druckluftanschluss 17 zum Anschluss einer nicht dargestellten Druckluftleitung auf, um einen Luftstrom zur Förderung von Streusand durch den ansteigenden Sandmischkanal 4 zu erzeugen. Über die Einstelltiefe t kann die Mündung 15 des Schubluftrohrs 14 relativ zum Auslaufabschnitt 9 positioniert und darüber die geförderte Streusandmenge beeinflusst werden. Im Sandmischkanal 4 nimmt der aus dem Schubluftrohr 14 strömende Luftstrom Streusand auf, weleher teils direkt aus dem Auslaufabschnitt 9 fällt und teils aus dem Sandaufnahmeraum 11 aufgewirbelt wird, und fördert diesen zu einem Sandumlenkraum 18 am oberen Ende des Sandmischkanals 4, in dem der mit Streusand beladene Luftstrom nach unten in den Sandausblaskanal 5 gelenkt wird. Der Sandmischkanal 4 steigt im dargestellten Ausführungsbeispiel unter einem Neigungswinkel α von 20° gegen die Horizontale an, wobei für den Neigungswinkel α je nach verwendetem Streusand einen Wert zwischen 10° und 40°, vorzugsweise zwischen 20° und 30°, ausgewählt werden kann.

Der Sandausblaskanal 5 ist durch eine sich von unten in den Gehäuseblock 2 erstreckende zweite zylindrische Bohrung 19 gebildet, welche im dargestellten Ausführungsbeispiel in einer Ebene mit der ersten Bohrung 10 liegt und denselben Durchmesser wie dieses aufweist. Der Sandumlenkraum 18 wird durch eine Querbohrung 20 gebildet, die sich senkrecht zur ersten Bohrung 10 und zur zweiten Bohrung 19 durch den Gehäuseblock 2 erstreckt und einen größeren Durchmesser als diese aufweist. Die Querbohrung 20 erstreckt sich derart, dass ihre Mantelfläche einen glatten Übergang von der äußeren Mantellinie des Sandmischkanals 4 in die äußere Mantellinie des Sandausblaskanals 5 bildet. Am unteren Ende des Sandausblaskanals 5 ist eine Austrittsöffnung 21 vorgesehen, durch die der Streusand mit dem Förderluftstrom aus dem Gehäuseblock 2 austritt, um durch die hier angeschlossene Sandleitung zur Reibwerterhöhung in den Spalt zwischen Fahrzeugrad und Fahrschiene geblasen zu werden.

Zur genaueren Dosierung der ausgetragenen Streusandmenge weist der Gehäuseblock 2 einen von oben in den Sandumlenkraum 18 mündenden Einströmkanal 22 für einen Luftstrahl auf, der durch einen in den Einströmkanal 22 lösbar eingesetzten Düseneinsatz 23 erzeugt wird. Der Luftstrahl ist nach unten koaxial in den Sandausblaskanal 5 gerichtet und erzeugt hierdurch einerseits eine Saugwirkung durch Unterdruck im Sandmischkanal 4 und andererseits eine Erhöhung des Volumenstroms der Förderluft im Sandausblaskanal 5.

Der Düseneinsatz 23 ist vorzugsweise als Drehteil, etwa als Messingdrehteil, ausgeführt und kann hierdurch mit hoher Präzision hinsichtlich seines Düsendurchmessers hergestellt werden. Der Düseneinsatz 23 ist im dargestellten Ausführungsbeispiel als zylindrische Hülse ausgeführt und weist eine axiale Durchgangsbohrung auf, die den präzisen Düsendurchmesser definiert. Am stromabwärtigen Ende weist die Durchgangsbohrung eine kegelförmige Senkung auf, während sie am stromaufwärtigen Ende zylindrisch aufgebohrt ist und einen flachen, zylindrischen Ansatz auf weist, der in eine entsprechende Senkung des Einströmkanals 22 passt. Deren Form erlaubt ein einfaches Einstecken des Düseneinsatzes 23 in den Einströmkanal 22 sowie ein ebenso einfaches Entfernen, so dass bei der erfindungsgemäßen Dosiereinrichtung 1 ohne großen Aufwand ein Wechsel des Düseneinsatzes 23 vorgenommen werden kann. Hierdurch kann ein verstopfter Düseneinsatz 23 schnell durch einen sauberen ersetzt werden oder aber durch einen anderen Düseneinsatz 23 mit kleinerem oder größerem Düsendurchmesser ausgetauscht werden. Hierzu steht ein Wechselsatz von Düseneinsätzen mit unterschiedlichen Düsendurchmessern entsprechend der Korngröße des verwendeten Streusandes bereit. Auf dem Gehäuseblock 2 ist unter Zwischenlage einer Dichtung ein Druckluftflansch 24 druckluftdicht, aber mittels einer Schraubverbindung lösbar befestigt. Innerhalb des Druckluftflansches 24 erstreckt sich ein Druckluftkanal 25 von einer Anschlussöffnung 26 für eine nicht dargestellte Druckluftleitung bis zu einem Auslass 27, der in den Einströmkanal 22 mündet. Über den Druckluftflansch 24 wird dem Düseneinsatz 23 Druckluft zugeführt, die durch den Einströmkanal 22 in den Sandumlenkraum 18 und weiter in den Sandausblaskanal 5 strömt.

In den Gehäuseblock 2 kann ein Wärmeelement 28 zur Erwärmung von Streusand integriert sein. Hierdurch wird der Streusand getrocknet und rutsch- und rieselfähig gehalten. Durch Integration des Wärmeelements 28 werden zusätzliche Bauteile und damit einhergehende Herstellungs- und Montagekosten eingespart. Das Wärmeelement 28 ist stabförmig ausgebildet und erstreckt sich in einer vertikal im Gehäuseblock 2 verlaufenden und im konischen Abschnitt 8 des Sandzuführtrichters 3 mündenden Aufnahmebohrung 29. Das Wärmeelement 28 umfasst einen Außensechskantabschnitt 30 zum Ansetzen eines Befestigungswerkzeugs, einen daran anschließenden Außengewindeabschnitt zur Verschraubung mit einem Innengewindeansatz der Aufnahmebohrung 29 und einen sich an diesen anschließenden Heizstab, der elektrische Energie, die durch stirnseitig von außen angeschlossene Versorgungsleitungen 31 zugeführt wird, in Wärmeenergie umwandelt. Im Gehäuseblock 2 kann ein seitlicher Einlass in die Aufnahmebohrung 29 vorgesehen sein, durch den ein Versorgungsluftstrom in einen den Heizstab umgebenden Ringspalt fließt. Dabei erwärmt sich die am Heizstab vorbeiströmende Luft und bildet einen Warmluftstrom, der in den zu trocknenden Streusand im Sandzuführtrichter 3 fließt. An der oberen Mündung der Aufnahmebohrung 29 ist ein Sinterfilter 32 angeordnet, der für den Warmluftstrom durchlässig ist, nicht aber für Streusand, wodurch eine Verstopfung der Mündung vermieden wird. Der Sinterfilter 32 ist kegelstumpfförmig ausgebildet und ragt von der Mantelfläche des konischen Abschnitts 8 nach oben in den Sandzuführtrichter 3. Der den Sinterfilter 32 nach oben verlassende Warmluftstrom durchströmt den Streusand im Sandzuführtrichter 3 und im darüber angeordneten Sandkasten entgegen der Sandzuführrichtung. Durch dieses Gegenstromprinzip wird eine besonders effektive Trocknung des Streusandes erzielt. Zusätzlich wird durch den länglichen Heizstab der Gehäuseblock 2 aufgeheizt, der zusätzlich Wärme an den nachrutschenden Streusand abgibt. Durch die Einstückigkeit des Gehäuseblocks 2 wird dieser durch Wärmeleitung auch im Bereich des Sandaufnahmeraums 11 aufgeheizt, so dass auch der darin befindliche Streusand getrocknet wird.

## Patentansprüche

1. Dosiereinrichtung (1) für eine Sandstreuanlage eines Schienenfahrzeugs, mit einem Gehäuseblock (2), in dem sich ein Sandweg von einem Sandzuführtrichter (3) über einen von einem Sandaufnahmeraum (11) zu einem Sandumlenkraum (18) geneigt ansteigenden Sandmischkanal (4) in einen senkrechten Sandausblaskanal (5) erstreckt, und mit einem von unten koaxial in den Sandmischkanal (4) ragenden Schubluftrohr (14) zur Erzeugung eines Streusand fördernden Luftstromes, **gekennzeichnet durch** einen von oben in den Sandumlenkraum (18) mündenden Einströmkanal (22), in den ein Düseneinsatz (23) zur Erzeugung eines nach unten in den Sandausblaskanal (5) gerichteten Luftstrahls durch einstecken lösbar eingesetzt ist, so dass ein einfaches Einstecken des Düseneinsatzes in den Einströmkanal sowie ein ebenso einfaches Entfernen erlaubt ist, und wobei der Düseneinsatz (23) aus einem Wechselsatz von Düseneinsätzen mit unterschiedlich bemessenen Düsendurchmessern entsprechend einer Korngröße des benutzten Streusandes auswählbar ist.

2. Dosiereinrichtung (1) nach Anspruch 1, wobei der Düseneinsatz (23) als Messingdrehteil ausgebildet ist.

3. Dosiereinrichtung (1) nach einem der Ansprüche 1 bis 2, wobei der Sandmischkanal (4) unter einem Neigungswinkel (α) im Bereich von 10° bis 40°, vorzugsweise von 20° bis 30°, gegen die Horizontale ansteigt.

4. Dosiereinrichtung (1) nach einem der Ansprüche 1 bis 3, wobei ein Auslaufabschnitt (9) des Sandzuführtrichters (3) im Bereich einer Mündung (15) des Schubluftrohrs (14) von oben in den Sandmischkanal (4) mündet.

5. Dosiereinrichtung (1) nach einem der Ansprüche 1 bis 4, wobei der Sandmischkanal (4) durch eine erste zylindrische Bohrungen (10) und der Sandausblaskanal (5) durch eine zweite zylindrische Bohrung (19) im Gehäuseblock (2) mit gleichen Durchmessern gebildet sind.

6. Dosiereinrichtung (1) nach Anspruch 5, wobei der Sandumlenkraum (18) durch eine senkrecht zum Sandmischkanal (4) und zum Sandausblaskanal (5) verlaufende zylindrische Querbohrung (20) gebildet ist, deren Durchmesser größer als die Durchmesser von Sandmischkanal (4) und Sandausblaskanal (5) ist.

7. Dosiereinrichtung (1) nach einem der Ansprüche 1 bis 6, wobei das Schubluftrohr (14) als Einschraubteil ausgebildet ist, welches bis zu einer vorgegebenen Einstelltiefe (t) von außen in die erste zylindrische Bohrung (10) eingeschraubt ist.

8. Dosiereinrichtung (1) nach einem der Ansprüche 1 bis 7, wobei der Gehäuseblock (2) als einstückiges Feingussteil oder 3-D-Druckteil gefertigt ist.

9. Dosiereinrichtung (1) nach einem der Ansprüche 1 bis 8, wobei in den Gehäuseblock (2) ein Wärmeelement (28) zur Erwärmung von Streusand integriert ist.

## Claims

1. Metering device (1) for a sand-spreading system of a rail vehicle, with a housing block (2), in which a sand path extends from a sand feeding funnel (3) via a sand mixing channel (4), which rises from a sand receiving space (11) in an inclined manner in relation to a sand deflecting space (18), into a vertical sand blowing-out channel (5), and with a pushing air tube (14), protruding coaxially into the sand mixing channel (4) from below, for producing an air stream conveying spreading sand, **characterized by** an inflow channel (22), which opens out into the sand deflecting space (18) from above and into which a nozzle insert (23) for producing an air jet directed downward into the sand blowing-out channel (5) is detachably fitted by insertion, so that easy insertion of the nozzle insert into the inflow channel and similarly easy removal is allowed, and wherein the nozzle insert (23) can be selected from a set of interchangeable nozzle inserts with differently dimensioned nozzle diameters in accordance with a grain size of the spreading sand used.

2. Metering device (1) according to Claim 1, wherein the nozzle insert (23) is formed as a brass turned part.

3. Metering device (1) according to either of Claims 1 and 2, wherein the sand mixing channel (4) rises at an angle of inclination (α) in the range of 10° to 40°, preferably of 20° to 30°, with respect to the horizontal.

4. Metering device (1) according to one of Claims 1 to 3, wherein an outlet portion (9) of the sand feeding funnel (3) opens out into the sand mixing channel (4) from above in the region of a mouth (15) of the pushing air tube (14).

5. Metering device (1) according to one of Claims 1 to 4, wherein the sand mixing channel (4) is formed by a first cylindrical borehole (10) and the sand blowing-out channel (5) is formed by a second cylindrical borehole (19) in the housing block (2), with the same diameters.

6. Metering device (1) according to Claim 5, wherein the sand deflecting space (18) is formed by a cylindrical transverse borehole (20) that runs perpendicularly in relation to the sand mixing channel (4) and the sand blowing-out channel (5) and the diameter of which is greater than the diameters of the sand mixing channel (4) and the sand blowing-out channel (5).

7. Metering device (1) according to one of Claims 1 to 6, wherein the pushing air tube (14) is formed as a screw-in part, which is screwed into the first cylindrical borehole (10) from the outside to a predetermined setting depth (t).

8. Metering device (1) according to one of Claims 1 to 7, wherein the housing block (2) is produced as a one-piece precision casting or 3D printed part.

9. Metering device (1) according to one of Claims 1 to 8, wherein a thermal element (28) for heating spreading sand is integrated in the housing block (2).

## Revendications

1. Dispositif de dosage (1) pour un dispositif de sablage d'un véhicule ferroviaire, comportant un bloc boîtier (2), dans lequel une voie de sable s'étend depuis une trémie d'alimentation de sable (3) dans un canal vertical d'éjection de sable (5), en passant par un canal de mélange de sable (4) montant en pente depuis un espace de réception de sable (11) vers un espace de déviation de sable (18), et comportant un tuyau d'air de poussée (14) faisant saillie coaxialement d'en bas dans le canal de mélange de sable (4) pour générer un courant d'air faisant avancer le sable, **caractérisé par** un canal d'entrée (22) débouchant depuis le haut dans l'espace de déviation de sable (18), dans lequel un insert de buse (23) est inséré de façon amovible par emmanchement pour générer un jet d'air dirigé vers le bas dans le canal d'éjection de sable (5), de manière à permettre l'insertion aisée de l'insert de buse dans le canal d'entrée ainsi que son démontage aussi aisé, l'insert de buse (23) pouvant être choisi d'un jeu de rechange d'inserts de buse à diamètres différents selon la granulométrie du sable utilisé.

2. Dispositif de dosage (1) selon la revendication 1, dans lequel l'insert de buse (23) est conçu sous forme d'une pièce tournée en laiton.

3. Dispositif de dosage (1) selon l'une des revendications 1 à 2, dans lequel le canal de mélange de sable (4) monte sous un angle d'inclinaison (α) compris entre 10° et 40°, de préférence entre 20° et 30°, par rapport à un plan horizontal.

4. Dispositif de dosage (1) selon l'une des revendications 1 à 3, dans lequel un tronçon d'écoulement (9) de la trémie d'alimentation de sable (3) débouche dans la zone d'une embouchure (15) du tuyau de poussée d'air (14) d'en haut dans le canal de mélange de sable (4).

5. Dispositif de dosage (1) selon l'une des revendications 1 à 4, dans lequel le canal de mélange de sable (4) est défini par un premier perçage cylindrique (10) et le canal d'éjection de sable (5) est défini par un deuxième perçage cylindrique (19) dans le bloc boîtier (2) ayant un diamètre identique au premier perçage.

6. Dispositif de dosage (1) selon la revendication 5, dans lequel l'espace de déviation de sable (18) est défini par un perçage transversal (20) s'étendant verticalement par rapport au canal de mélange de sable (4) et au canal d'éjection de sable (5) dont le diamètre dépasse ceux des canaux de mélange de sable (4) et d'éjection de sable (5).

7. Dispositif de dosage selon l'une des revendications 1 à 6, dans lequel le tuyau de poussée d'air (14) est conçu sous forme d'une pièce mâle vissée depuis l'extérieur dans le premier perçage cylindrique (10) jusqu'à une profondeur réglée (t).

8. Dispositif de dosage selon l'une des revendications 1 à 7, dans lequel le bloc boîtier (2) est réalisé sous forme monobloc de moulage de précision ou d'une pièce d'impression 3D.

9. Dispositif de dosage selon l'une des revendications 1 à 8, dans lequel un élément de chauffage (28) est incorporé au bloc boîtier (2) pour réchauffer le sable.
